Europäisches Patentamt

European Patent Office

Office européen des brevets

(11) Veröffentlichungsnummer: **0 265 370**
**A1**

(12) **EUROPÄISCHE PATENTANMELDUNG**

(21) Anmeldenummer: **87810508.9**

(51) Int. Cl.⁴: **B 64 F 1/315**

(22) Anmeldetag: **03.09.87**

(30) Priorität: **13.10.86 CH 4077/86**

(43) Veröffentlichungstag der Anmeldung:
**27.04.88 Patentblatt 88/17**

(84) Benannte Vertragsstaaten:
**AT BE CH DE ES FR GB IT LI NL SE**

(71) Anmelder: **Gebrüder Frech AG**
**Zunzgerstrasse 24-26**
**CH-4450 Sissach (CH)**

(72) Erfinder: **Stark, Karl-Heinz**
**Bertelweg 316**
**CH-4249 Himmelried (CH)**

(74) Vertreter: **Feldmann, Paul David et al**
**c/o Patentanwaltsbüro FELDMANN AG Kanalstrasse 17**
**CH-8152 Glattbrugg (CH)**

(54) **Mobile Flugzeugtreppe.**

(57) Die Flugzeugtreppe (1) ist mit ihren Stufen als Ganzes starr. Sie ist in vertikaler Richtung um eine horizontalen Achse schwenkbar. Durch die Schwenkbarkeit der Treppe (1) lässt sich mit ihrem oberen Ende (4) die Höhe zwischen 2.10 und 2.70 Metern bestreichen. Das Schwenken und damit die Verstellung der Treppenhöhe erfolgt in einer Ausführung mittels einer Hydraulik-Zylinder- Kolben-Einheit (8), auf welcher die Treppe (1) auf dem Fahrgestell (2) abgestützt ist. In einer anderen Ausführung sind Treppe (1) und Fahrgestell (2) starr zueinander angeordnet. Die Schwenkung erfolgt mittels zwei am Fahrgestellheck angebrachten hydraulischen Stützfüssen (14) und mindestens einem im vorderen Bereich der Flugzeugtreppe angeordneten hydraulischen Stützfuss (15), der entsprechend dem gewünschten Schwenkbereich ein- und ausfahrbar ist. Das Fahrgestell (2) kann das eines Anhängers oder wie hier gezeigt das eines selbstfahrenden Fahrzeuges sein.

EP 0 265 370 A1

**Beschreibung**

MOBILE FLUGZEUGTREPPE

Mobile Flugzeugtreppen sind an sich seit langem bekannt. Auch Ausführungen mit höhenverstellbarem oberen Treppenende sind allgemein bekannt und verbreitet. Die Mobilität wird erreicht, indem die Flugzeugtreppen entweder auf einem antriebslosen Fahrgestell angeordnet oder auf einem selbstfahrenden Fahrzeug aufgebaut sind. In Bezug auf die Höhenverstellbarkeit des oberen Treppenendes unterscheidet man bisher grundsätzlich zwei Konstruktionen. Bei der ersten werden zwei parallel übereinander angeordnete, je starre Treppen mit starren Stufen längs gegeneinander mittels Teleskopen verschoben. Dieses Verschieben kann nur stufenweise erfolgen, ansonsten eine unterschiedliche Stufenhöhe beim Uebergang von der ersten auf die zweite Treppe anfällt. Diese würde sodann als eigentlicher Stolperstein wirken. Doch selbst bei stufenweisem Ausfahren fällt beim Uebergang unweigerlich eine Stufe doppelter Tiefe an, was wiederum beim Begehen unangenehm empfunden wird.

Die andere, ungleich kompliziertere Konstruktion erlaubt eine stufenlose, gleichzeitige Verstellung der Höhe sämtlicher Treppenstufen. Dies wird erreicht durch eine aufwendige Parallelogramm-Mechanik mit vielen Scherstellen, welche sich nur für grosse Flugzeugtreppen lohnt. Für kleinere Ausführungen mit einer Treppenendhöhe zwischen 2 und 3 Metern sind beide erwähnten Konstruktionsarten wenig geeignet. Starre Treppen ermöglichen keine regelmässige Stufenfolge und Ausführungen mit höhenverstellbaren Stufen sind aufwendig in der Konstruktion. Die deutsche Berufsgenossenschaft hat wegen der Unfallgefahr an den vielen Scherstellen solcher Treppen spezielle Vorschriften erlassen, deren Einhaltung die Konstruktion zusätzlich verteuert.

Es ist die Aufgabe der vorliegenden Erfindung, eine Flugzeugtreppe für den Einsatz im tiefen Schwellenbereich der Flugzeugtüren zu schaffen, welche mit einfachsten Mitteln den Bereich zwischen 2.10 und 2.70 Metern bestreichen kann und die eingangs erwähnten Nachteile überwindet.

Diese Aufgabe wird gelöst von einer mobilen Flugzeugtreppe mit höhenverstellbarem oberen Treppenende, mit einem Fahrgestell und einer darauf angeordneten, starren Treppe, die sich dadurch auszeichnet, dass die Treppe in vertikaler Richtung um eine quer zur Treppe liegende Achse schwenkbar ist, wobei die Stufenflächen in Treppauf-Richtung in der untersten Schwenklage leicht abwärts und in der obersten Schwenklage leicht aufwärts geneigt sind.

In den nachfolgenden Zeichnungen sind vorteilhafte Ausführungen der erfindungsgemässen Flugzeugtreppe beispielsweise dargestellt.

Es zeigt:

Figur 1 eine die Flugzeugtreppe mit Schwenkachse am unteren Treppenanfang;

Figur 2 eine die Flugzeugtreppe mit Schwenkachse am oberen Treppenende.

Figur 3 eine Flugzeugtreppe mit starr auf dem Fahrgestell angeordneter Treppe.

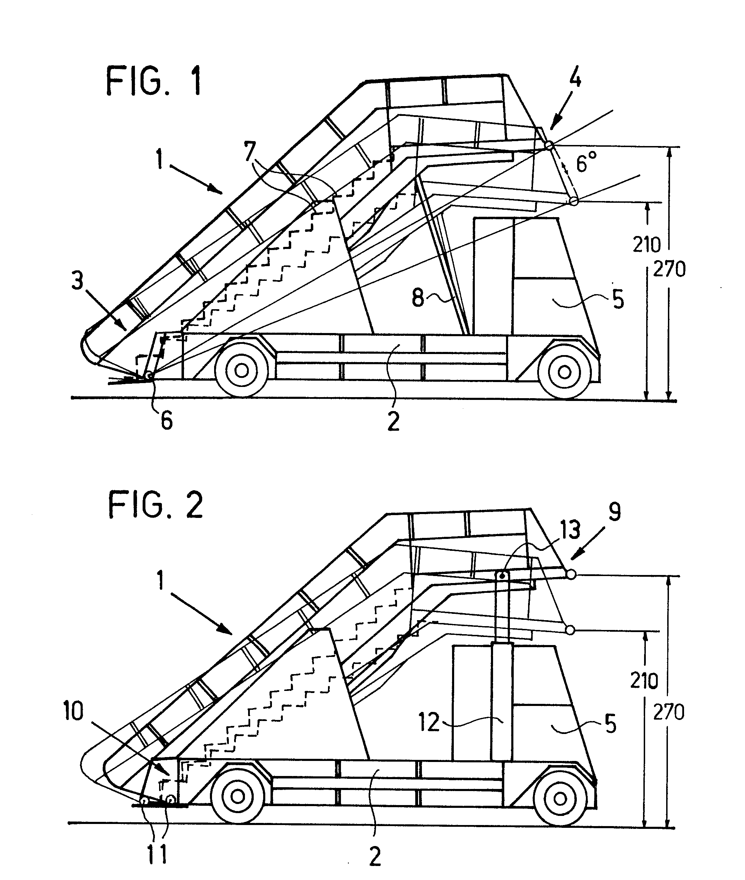

Die erfindungsgemässe Flugzeugtreppe 1, die in Figur 1 dargestellt ist, ist an ihrem unteren Treppenanfang 3 schwenkbar über die Achse 6 im Bereich des Fahrzeughecks am Fahrgestell 2 angelenkt. Das Fahrgestell 2 kann ein blosser Anhänger sein oder aber wie hier gezeigt ein selbstfahrendes Fahrzeug mit geschlossener Führerkabine 5. Die Flugzeugtreppe 1 kann mit ihrem oberen Ende 4 in der Höhe verstellt werden. Für kleinere Flugzeuge, die insbesondere im Kurzstreckenverkehr eingesetzt werden, muss die Höhe zwischen 2.10 und 2.70 Metern bestrichen werden können. Die Treppe 1 ist als Ganzes starr gefertigt, das heisst, die einzelnen Treppenstufen sind starr und lassen sich relativ zueinander nicht bewegen. Die Stufenhöhe sowie die Stufentiefe wird möglichst ideal gewählt, um eine angenehme Stufenfolge beim Begehen der Treppe zu gewährleisten. Es versteht sich, dass die Treppe 1 beidseits mit Geländern versehen ist, die einen Handlauf auf körpergerechter Höhe aufweisen. Diese Treppe 1 ist nun als Ganzes schwenkbar am Fahrgestell 2 angelenkt. Die mittlere Schwellenhöhe von kleineren Flugzeugen liegt nun bei etwa 2.50 Metern. Bei einer als angenehm empfundenen Treppensteigung von etwa 35° wird diese Höhe von einer ungefähr 4 Meter langen Treppe erreicht. Will man nun den erforderlichen Bereich von 2.10 bis 2.70 Metern Schwellenhöhe bestreichen, so kann dies bei einer solchen Treppenlänge bereits dadurch geschehen, dass die ganze Treppe in ihrer Steigung geringfügig verändert wird. Von der mittleren Schwenklage aus, bei der die einzelnen Stufenflächen genau horizontal liegen, macht die entsprechende Aenderung in der Steigung bloss etwa 3 Winkelgrade auf- oder abwärts aus. Dies ist noch so gering, dass es beim Begehen der Treppe kaum wahrgenommen wird und jedenfalls nicht unangenehm empfunden wird. Der Schwenkvorgang um die Achse 6 erfolgt mittels einer hydraulischen Zylinder-Kolben-Einheit 8, auf welcher die Treppe 1 im vorderen Bereich auf dem Fahrgestell 2 abgestützt ist. Mittels dieser Einheit 8 lässt sich die Treppe 1 mit ihrem oberen Ende 4 zentimetergenau in eine gewünschte Höhe fahren. Das Dach der Führerkabine 5 kann mit einem Fenster versehen sein, das dem Führer den Blick auf das obere Treppenende 4 freigibt, so dass er es sorgfältig an den Flugzeugrumpf heranfahren kann.

Eine andere Ausführung der erfindungsgemässen Flugzeugtreppe zeigt Figur 2. Hier befindet sich die Achse 13, an der die starre Treppe 1 angelenkt ist, nicht am Fahrzeugheck, sondern die Treppe 1 ist mit ihrem oberen Ende 9 schwenkbar im vorderen Bereich des Fahrzeuges an diesem angelenkt. Die horizontale Schwenkachse 13 ist am Fahrzeug vertikal verstellbar geführt und gelagert. Mit der vertikalen Verstellung der Achse 13 wird direkt die Höhe des oberen Treppenendes 9 verstellt. Die Treppe 1 ist mit ihrem unteren Anfang 10 auf Rollen 11 gelagert, welche längs auf dem Fahrzeugheck geführt sind. Sie erlauben eine Verschiebung des Treppenanfangs 10 in Längsrichtung relativ zum Fahrzeug während die Treppenhöhe verstellt wird. Die Achse 13 und damit die Treppenhöhe wird wiederum mittels einer Hydraulik Zylinder-Kolben Einheit 12 verstellt. Bei dieser Konstruktion bleibt das obere Treppenende 9 immer in annähernd der gleichen Lage über der Führerkabine 5, dafür verschiebt sich der untere Treppenanfang 10.

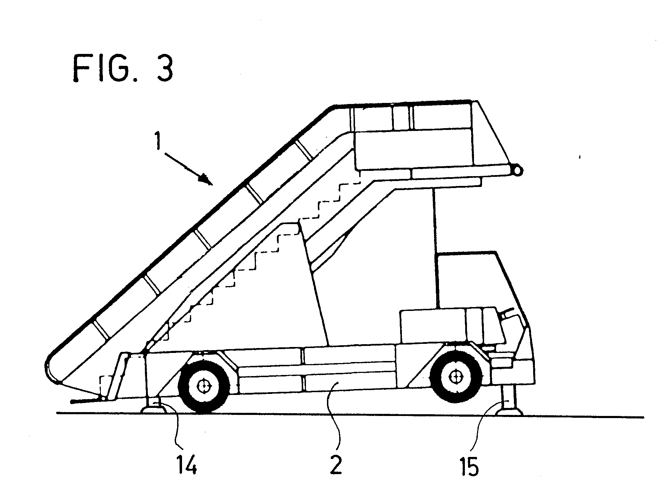

Figur 3 zeigt eine Ausführung, bei welcher die Treppe 1 und das Fahrgestell 1 starr zueinander angeordnet sind. Das Auf- und Abfahren des oberen Treppenendes erfolgt durch eine Schwenkung der Treppe 1 mitsamt dem Fahrgestell 2, auf dem sie augebaut ist. Zu diesem Zweck ist das Fahrgestellheck oder die Treppe dort beidseits mit einem hydraulisch ein- und ausfahrbaren Stützfuss 14 ausgerüstet. Im vorderen Bereich des Fahrgestells 2 ist mindestens ein hydraulisch ein- und ausfahrbarer Stützfuss 15 angeordnet. Zum Aufschwenken werden nun vorerst die beiden hinteren Stützfüsse ausgefahren. Diese verleihen der ganzen Flugzeugtreppe die nötige Stabilität um die Längsachse. Dann wird der vordere Stützfuss 15 oder werden die vorderen Stützfüsse 15 soweit ausgefahren, bis das obere Treppenende 4 die gewünschte Höhe erreicht. Die Schwenkachse liegt also bei dieser Konstruktion am Boden bei den hinteren Stützfüssen 14. Wenn das Fahrgestell 2 mit den Rädern am Boden steht, ist die Treppe 1 starr zum Fahrgestell 2 so angeordnet ist, dass in Treppauf-Richtung die Stufenflächen leicht abwärts geneigt sind. Wird die Flugzeugtreppe mit den hinteren Stützfüssen 14 hinten abgestützt und mit dem oder den vorderen Stützfüssen 15 vorne soweit angehoben, dass das Fahrgestell etwa 3° geneigt ist, so sind die Stufenflächen der Treppe 1 gerade waagrecht.

Die Vorteile der erfindungsgemässen Flugzeugtreppe liegen vor allem in der bedeutend vereinfachten Konstruktion gegenüber den aufwendigen Verstelltreppen, wie man sie bisher kannte. Mit dem Wegfallen von Scherstellen wird das Unfallrisiko im Betrieb bedeutend eingeschränkt, was den Forderungen der deutschen Berufsgenossenschaft entgegenkommt. Insgesamt können damit mit wirtschaftlich günstigsten Mitteln die massgeblichen Vorschriften dieser Genossenschaft erfüllt werden. Auch die Wartung und der Betrieb der erfindungsgemässen Flugzeugtreppe sind bedeutend einfacher und wirtschaftlicher als bei herkömmlichen Konstruktionen.

## Patentansprüche

1. Mobile Flugzeugtreppe mit höhenverstellbarem oberen Treppenende (4), mit einem Fahrgestell (2) und einer darauf angeordneten,starren Treppe (1), dadurch gekennzeichnet, dass die Treppe (1) in vertikaler Richtung um eine quer zur Treppe (1) liegende Achse (6) schwenkbar ist, wobei die Stufenflächen (7) in Treppauf-Richtung in der untersten Schwenklage leicht abwärts und in der obersten Schwenklage leicht aufwärts geneigt sind.

2. Mobile Flugzeugtreppe nach Anspruch 1, dadurch gekennzeichnet, dass am Fahrgestell (2) Mittel (14,15) vorhanden sind, die das Auf- und Abschwenken des Fahrgestells (2) zusammen mit der starr darauf angeordneten Treppe (1) erlauben.

3. Mobile Flugzeugtreppe nach Anspruch 1, dadurch gekennzeichnet, dass die Treppe (1) im Bereich ihres unteren Anfangs (3) an einer stationären Schwenkachse (6) am Fahrgestell (2) angelenkt ist und Mittel (8) vorhanden sind, mit denen die Treppe (1) gegenüber dem Fahrgestell (2) auf- und abschwenkbar sowie in jeder Schwenklage arretierbar ist.

4. Mobile Flugzeugtreppe nach Anspruch 1, dadurch gekennzeichnet, dass die Treppe (1) im Bereich ihres oberen Endes (9) an einer höhenverstellbaren, horizontalen Achse (13) schwenkbar angelenkt ist und dass ihr unterer Anfang (10) mittels Rollen (11) auf dem Fahrwerk (2) in horizontaler Richtung verschiebbar gelagert ist.

5. Mobile Flugzeugtreppe nach Anspruch 2, dadurch gekennzeichnet, dass die Mittel (14,15) aus mindestens zwei hydraulisch aus- und einfahrbaren Stützfüssen (14) am Fahrgestellheck sowie aus mindestens einem hydraulisch aus- und einfahrbaren Stützfuss im vorderen Bereich des Fahrgestells (2) bestehen, mit welchem bei ausgefahrenen hinteren Stützfüssen (14) die Treppe (1) mitsamt dem Fahrgestell (2) auf- und abschwenkbar und in jeder Schwenklage arretierbar ist.

6. Mobile Flugzeugtreppe nach Anspruch 2 oder 3, dadurch gekennzeichnet, dass die Mittel (8,12) zum Auf- und Abschwenken der Treppe (1) aus mindestens einer Hydraulikzylinder-Kolbeneinheit (8,12) bestehen, mittels der die Treppe (1) auf dem Fahrgestell (2) abgestützt ist.

0265370

**FIG. 1**

**FIG. 2**

0265370

# FIG. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-2 112 290  (ZARGES)<br>* Figur 5; Seite 9, Zeile 30 - Seite 10, Zeile 14 *<br>--- | 1-3 | B 64 F    1/315 |
| X | CH-A-  509 193  (GEBR. FRECH - FABRIK FÜR TRANSPORTGERÄTE)<br>* Insgesamt *<br>--- | 4,6 | |
| X | CH-A-  490 991  (GEBR. FRECH - FABRIK FÜR TRANSPORTGERÄTE)<br>* Spalte 2, Zeile 5 *<br>--- | 5,6 | |
| A | GB-A-  594 643  (SWAISGOOD)<br>* Insgesamt *<br>----- | 1 | |

**RECHERCHIERTE SACHGEBIETE (Int. Cl.4)**

B 64 F    1/315

Der vorliegende Recherchenbericht wurde für alle Patentansprüche erstellt

| Recherchenort | Abschlußdatum der Recherche | Prüfer |
|---|---|---|
| DEN HAAG | 19-01-1988 | HAUGLUSTAINE H.P.M. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
••••••••••••••••••••••••••••••••••••••••••••••••••••••••••••••••••
& : Mitglied der gleichen Patentfamilie, übereinstimmendes
    Dokument

EPO FORM 1503 03.82 (P0403)